# EUROPÄISCHE PATENTANMELDUNG

(11) **EP 1 394 432 A2**
(43) Veröffentlichungstag der Anmeldung: **03.03.2004**
(21) Anmeldenummer: 03018598.7
(22) Anmeldetag: 19.08.2003
(51) Int. Cl.: F16D 13/58

(54) **Gehäuseanordnung für eine Reibungskupplung**

(30) Priorität: 28.08.2002 DE 10239419
(71) Anmelder: Sachs Race Engineering GmbH, 97424 Schweinfurt (DE)
(72) Erfinder: Friedrich, Horst, 97491 Aidhausen (DE); Huisjes, Arnold, 97424 Schweinfurt (DE); Unsleber, Elmar, 97490 Poppenhausen (DE); Pankoke, Jörg, 71229 Leonberg (DE)

(57) **Zusammenfassung**

Eine Gehäuseanordnung für eine Reibungskupplung umfasst einen ringartigen Gehäusewandungsbereich (12), welcher an seiner nach radial innen weisenden Innenseite (18) eine Verzahnungsformation (20) zur Drehankopplung wenigstens eines Reiborgans aufweist, ferner umfassend einen mit dem Gehäusewandungsbereich (12) integralen Gehäusebodenbereich (16).

## Beschreibung

Die vorliegende Erfindung betrifft eine Gehäuseanordnung für eine Reibungskupplung sowie ein Verfahren zur Herstellung einer derartigen Gehäuseanordnung.

Bei Reibungskupplungen, wie sie beispielsweise im Rennsportbereich eingesetzt werden, ist im Allgemeinen eine Gehäuseanordnung vorgesehen, bei welcher ein ringartiger Gehäusewandungsbereich an seiner Innenseite eine Verzahnungsformation aufweist, mit welcher Lamellen oder reibscheibenartig ausgebildete Reiborgane in Drehmitnahmeeingriff stehen. An einer axialen Endseite ist dieser ringartige Gehäusewandungsbereich mit einem ringscheibenartigen Gehäusebodenbereich verbunden, der beispielsweise ein Schwungrad bilden kann. Diese beiden angesprochenen Komponenten werden separat hergestellt, wobei beispielsweise der Gehäusewandungsbereich mit der an seiner Innenseite vorgesehenen Verzahnungsformation durch Drahterodieren aus einem ringartigen, also mit im Wesentlichen unstrukturierter Oberfläche an seiner Innenseite vorgesehenen Rohling hergestellt wird. Auch der Gehäusebodenbereich wird als ringartiges Scheibenbauteil separat hergestellt und anschließend mit dem Gehäusewandungsbereich durch Verschweißen, beispielsweise Elektronenstrahlschweißen, fest verbunden. Die so hergestellte Baugruppe muss zum Erhalt der erforderlichen Präzision noch nachgearbeitet werden, beispielsweise durch Überdrehen der Schweißnaht. Neben der Tatsache, dass dieser Vorgang der Herstellung eines solchen Bauteils vergleichsweise aufwending durchzuführen ist, führt ein Verbindungsvorgang, beispielsweise durch Verschweißen, zweier Bauteile zum Erhalt einer an sich mit hoher Präzision bereitzustellenden Baugruppe immer zu der Gefahr, dass durch die eingebrachte Wärme bzw. allgemein den Verbindungsvorgang zum Teil auch nur geringfügige Ungleichförmigkeiten eingeführt werden, die insbesondere bei den im Rennsport oftmals erreichten Drehzahlen von bis zu 18.000 Umdrehungen pro Minute zu erheblichen Umwuchtschwingungen führen können.

Es ist die Aufgabe der vorliegenden Erfindung, eine Gehäuseanordnung für eine Reibungskupplung vorzusehen, welche in einfacher Art und Weise und ohne der Gefahr der Einführung von Ungleichförmigkeiten herstellbar ist. Ferner betrifft die Erfindung ein Verfahren zum Herstellen einer derartigen Gehäuseanordnung.

Gemäß einem ersten Aspekt betrifft die vorliegende Erfindung zur Lösung der voranstehenden Aufgabe eine Gehäuseanordnung für eine Reibungskupplung, umfassend einen ringartigen Gehäusewandungsbereich, welcher an seiner nach radial innen weisenden Innenseite eine Verzahnungsformation zur Drehankopplung wenigstens eines Reiborgans aufweist, ferner umfassend einen mit dem Gehäusewandungsbereich integralen Gehäusebodenbereich.

Durch das integrale Ausgestalten der Gehäuseanordnung mit dem Gehäusewandungsbereich und dem Gehäusebodenbereich ist es nicht erforderlich, diese beiden Bereiche der Gehäuseanordnung durch nachfolgende Bearbeitungsvorgänge miteinander zu verbinden und darauf folgend wieder irgendwelche Nachbearbeitungs- oder Korrekturmaßnahmen durchzuführen. Es kann also ein Arbeitsvorgang, der vor allem hinsichtlich der Erzeugung von Ungleichförmigkeiten kritisch ist, entfallen.

Beispielsweise kann vorgesehen sein, dass die Verzahnungsformation eine Mehrzahl von sich in Richtung einer Gehäuselängsachse erstreckenden und in Umfangsrichtung aufeinander folgenden Verzahnungsvorsprüngen aufweist.

Um einerseits die Fertigung der Verzahnungsformation am Gehäusewandungsbereich zu erleichtern, andererseits gleichzeitig auch eine Gewichtseinsparung erlangen zu können, wird vorgeschlagen, dass im Gehäusebodenbereich jeweils in einem zwischen zwei Verzahnungsvorsprüngen liegenden Bereich eine wenigstens teilweise an die Form der Verzahnungsvorsprünge angepasste Öffnung vorgesehen ist.

Gemäß einem weiteren Aspekt wird die eingangs genannte Aufgabe gelöst durch ein Verfahren zur Herstellung einer Gehäuseanordnung für eine Reibungskupplung, insbesondere einer erfindungsgemäßen Gehäuseanordnung, umfassend die Schritte: a) Herstellen eines Gehäuserohlings mit einem ringartigen Gehäusewandungsbereich und einem damit integralen Gehäusebodenbereich, b) Bilden einer Verzahnungsformation an einer Innenseite des ringartigen Gehäusewandungsbereichs. Erfindungsgemäß wird also die Verzahnungsformation erst dann gebildet, wenn ein den Gehäusewandungsbereich und den Gehäusebodenbereich umfassender Gehäuserohling im Wesentlichen in seiner Grundform fertiggestellt ist.

Dabei kann beispielsweise vorgesehen sein, dass im Schritt a) der ringartige Gehäusewandungsbereich mit einer im Wesentlichen unstrukturierten Oberfläche an seiner Innenseite bereitgestellt wird. Es ist also beispielsweise möglich, den Gehäuserohling entweder in einem Gießvorgang herzustellen und dann durch Drehbearbeitung in seine Grundform zu bringen, oder aus einem massiven Materialblock herauszuarbeiten, beispielsweise wiederum durch Drehbearbeitung.

Um bei der nachfolgenden Fertigung der Verzahnungsformation möglichst wenig Material bearbeiten zu müssen, wird vorgeschlagen dass im Schritt
a) der ringartige Gehäusewandungsbereich mit einem Innendurchmesser bereitgestellt wird, welcher im Wesentlichen dem minimalen Innendurchmesser der im Schritt b) zu bildenden Verzahnungsformation entspricht.

Auch die Maßnahmen zur Herstellung der Verzahnungsformation können materialabhebende Bearbeitungsschritte umfassen. Es ist beispielsweise möglich, dass die Verzahnungsformation durch Drahterodieren gebildet wird. Um dieses Drahterodieren bei dem im Wesentlichen topfartig ausgebildeten erfindungsgemäß bereitzustellenden Gehäuserohling zu ermöglichen, wird vorgeschlagen, dass im Gehäusebodenbereich in einem Bereich zwischen zwei zu bildenden Verzahnungsvorsprüngen der Verzahnungsformation eine Öffnung zum Hindurchführen eines Erodierdrahtes gebildet wird.

Vor allem im Rennsportbereich besteht eine wesentliche Anforderung darin, die verschiedenen Bauteile mit möglichst geringem Gewicht bereitzustellen. Neben der Auswahl geeigneter Materialien, die einerseits eine entsprechend geringe Dichte aufweist, andererseits jedoch auch die erforderliche Stabilität gewährleisten können, kann dazu beispielsweise vorgesehen sein, dass vor oder nach dem Schritt b) im Gehäusewandungsbereich wenigstens eine zwischen zwei gegebenenfalls noch zu bildenden Verzahnungsvorsprüngen liegende Radialöffnung gebildet wird.

Um die erfindungsgemäße Gehäuseanordnung in einfacher Art und Weise mit einem Gehäusedeckel, an welchem dann auch ein Kraftspeicher beispielsweise abgestützt sein kann, verbinden zu können, wird vorgeschlagen, dass vor oder nach dem Schritt b) an einer vom Gehäusebodenbereich entfernten Endseite des Gehäusewandungsbereichs im Bereich wenigstens eines gegebenenfalls noch zu bildenden Verzahnungsvorsprungs der Verzahnungsformation eine Axialöffnung, vorzugsweise Innengewindeöffnung, gebildet wird.

Die vorliegende Erfindung wird nachfolgend mit Bezug auf die beiliegenden Zeichnungen detailiert beschrieben. Es zeigt:
- Fig. 1: eine perspektivische Ansicht einer erfindungsgemäßen Gehäuseanordnung von einer axialen Seite betrachtet;
- Fig. 2: die in Figur 1 gezeigte Gehäuseanordnung von der anderen axialen Seite betrachtet;
- Fig. 3: eine Axialansicht der erfindungsgemäßen Gehäuseanordnung, betrachtet von der axial offenen Seite her;
- Fig. 4: das im Kreis IV der Figur 3 enthaltene Detail vergrößert;

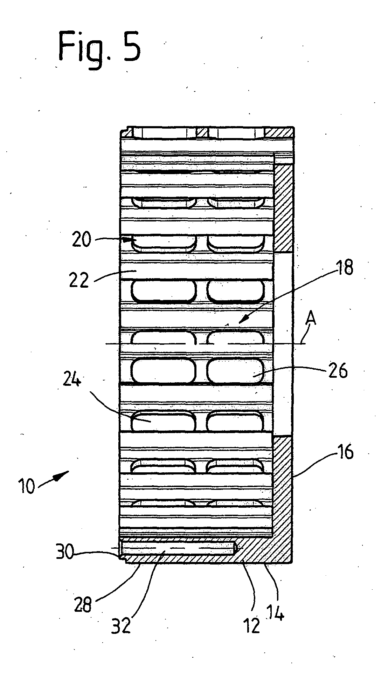

- Fig. 5: eine Längsschnittansicht der in Figur 3 gezeigten Gehäuseanordnung, geschnitten längs einer Linie V-V in Figur 3.

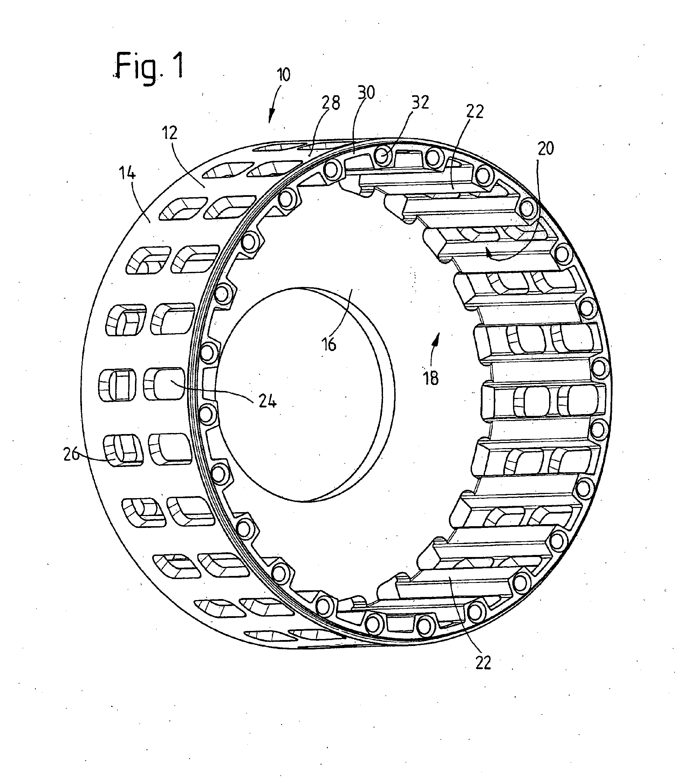

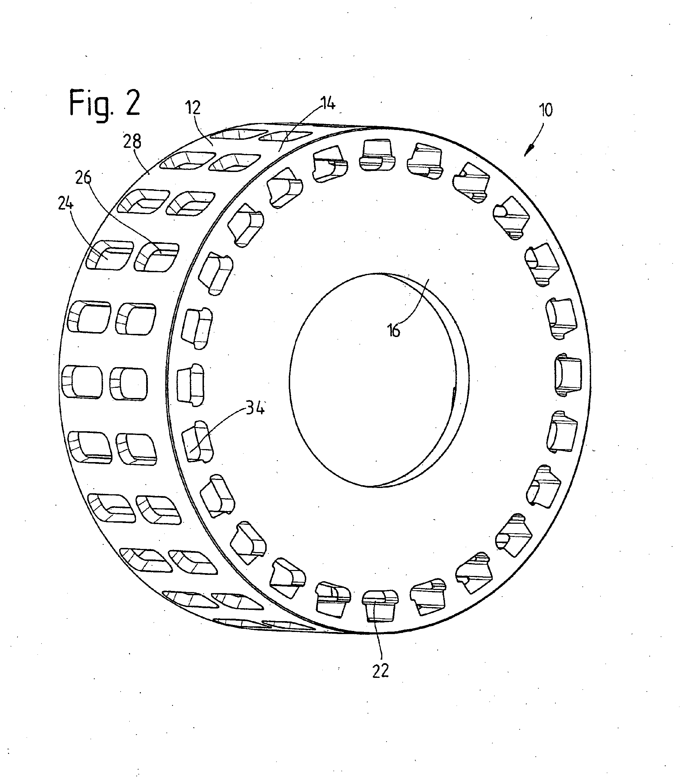

Die in den Figuren 1 und 2 erkennbare erfindungsgemäße Gehäuseanordnung 10 für eine Reibungskupplung umfasst einen ringartigen Gehäusewandungsbereich 12, der an einem axialen Endbereich 14 integral verbunden ist mit einem ringscheibenartigen Gehäusebodenbereich 16. D.h., der Gehäusewandungsbereich 14 und der Gehäusebodenbereich 16 sind aus einem Materialblock gebildet und sind nicht durch irgendwelche nachträgliche Verbindungs- oder Fügevorgänge zu einem Bauteil zusammengesetzt.

Man erkennt in der Figur 1, dass der ringartige Gehäusewandungsbereich 12 an seiner Innenseite 18 strukturiert ist und eine allgemein mit 20 bezeichnete Verzahnungsformation aufweist. Diese Verzahnungsformation 20 umfasst im Wesentlichen über die gesamte axiale Länge des Gehäusewandungsbereichs 10 sich erstreckende Verzahnungsvorsprünge 22. Mit diesen Verzahnungsvorsprüngen 22 stehen entsprechende Gegenverzahnungsvorsprünge von mit der Gehäuseanordnung 10 zur Drehung zu koppelnden Reiborganen in Drehmitnahmeeingriff, so dass diese Reiborgane grundsätzlich noch axial bezüglich der Gehäuseanordnung 10 beweglich sind. Jeweils im Bereich zwischen zwei Verzahnungsvorsprüngen 22 der Verzahnungsformation 20 sind im Gehäusewandungsbereich 12 zwei axial aufeinanderfolgende Radialöffnungen 24, 26 vorgesehen, die zum einem für eine Durchlüftung und somit eine bessere Kühlung der die Gehäuseanordnung 10 umfassenden Reibungskupplung sorgen, und zum anderen auch zur Gewichtseinsparung beitragen. In den Verzahnungsvorsprüngen 22 der Verzahnungsformation 20 sind ferner an einer im zweiten Endbereich 28 des Gehäusewandungsbereichs 12 vorgesehenen Stirnseite 30 Axialöffnungen 32 vorgesehen, die vorzugsweise als Innengewindeöffnungen ausgebildet sind. Diese Öffnungen 32 können Schraubbolzen aufnehmen, durch welche ein Gehäusedeckel dann an dem axialen Endbereich 28 des Gehäusewandungsbereichs 12 festgelegt werden kann. An diesem in den Figuren nicht dargestellten Gehäusedeckel kann ein die verschiedenen Reiborgane beaufschlagender Kraftspeicher abgestützt sein. Es sei darauf hingewiesen, dass selbstverständlich auch der Gehäusebodenbereich 14 diesen der Kraftabstützung dienenden Abschnitt bilden kann und ein mit dem Gehäusewandungsbereich 12 noch zu verbindender Deckel dann als Schwungrad wirksam sein kann und die Anbindung an ein Antriebsaggregat vorsehen kann.

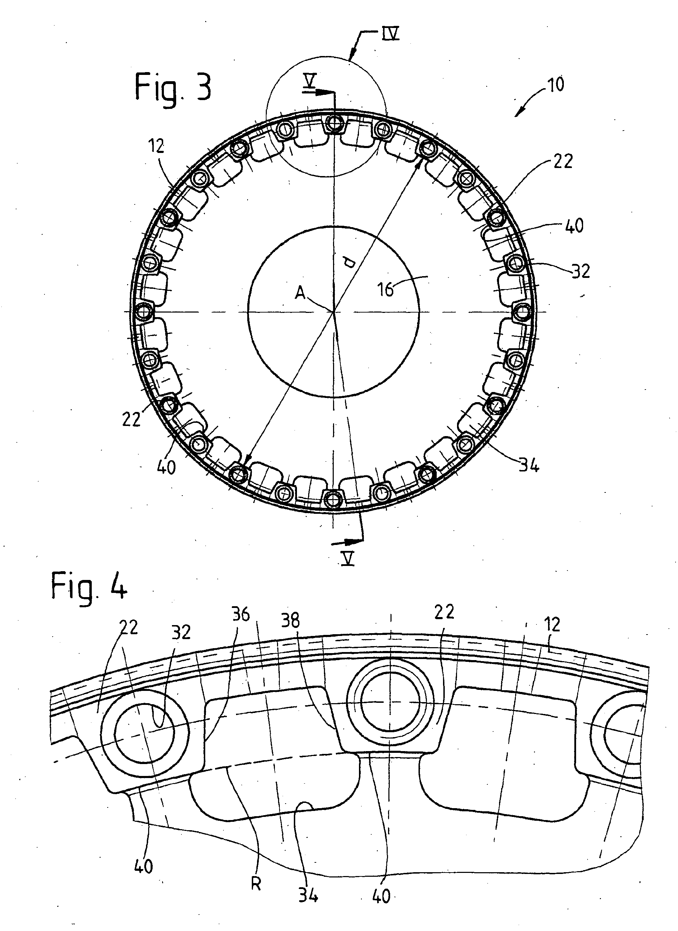

Man erkennt in Figur 2 weiter, dass im Gehäusebodenbereich 16 in Umfangsrichtung aufeinanderfolgend mehrere Öffnungen 34 gebildet sind, die bezüglich den in Umfangsrichtung aufeinanderfolgenden Verzahnungsvorsprüngen 22 so positioniert sind, dass sie im Wesentlichen jeweils mittig zwischen zwei derartigen Verzahnungsvorsprüngen 22 liegen. Man erkennt vor allem in Figur 4, dass diese Öffnungen 34 in ihrer Umfangskontur bereichsweise der Umfangskontur der Verzahnungsvorsprünge 22 entsprechen. Dies trifft vor allem für die in Umfangsrichtung gelegenen Verzahnungsflanken 36, 38 sowie den Übergangsbereich zur Innenoberfläche 40 der verschiedenen Verzahnungsvorsprünge 22 zu. Diese Innenoberfläche 40 weist grundsätzlich eine kreisringsegmentartige Form auf, so dass all die Innenoberflächen 40 der Verzahnungsvorsprünge 22 eine durch eine Linie R in Figur 4 repräsentierte Ringfläche aufspannen.

Eine Vorgehensweise zur Herstellung der vorangehend hinsichtlich ihres konstruktiven Aufbaus beschriebenen Gehäuseanordnung 10 wird nachfolgend beschrieben.

Es wird zunächst in einer ersten Herstellungsphase ein Gehäuserohling erzeugt, der eine im Wesentlichen topfartige Konfiguration aufweist und bereits den Gehäusebodenbereich 16 und einen ringartigen Gehäusewandungsbereich 12, jedoch ohne Strukturierung an der Innenseite 18 aufweist. Dieser Gehäuserohling kann beispielsweise durch Ausdrehen eines Metallmaterialblocks, beispielsweise Stahlmaterial, Aluminiummaterial oder dergleichen, hergestellt werden. Grundsätzlich kann auch in einem Gußverfahren bereits ein Rohling mit dieser Grundform bereitgestellt werden, wobei dieser Rohling dann zum Erhalt der erforderlichen Präzision noch durch Drehbearbeitung oder dergleichen überarbeitet werden muss. Bei diesem Vorgang wird der zunächst noch unstrukturierte Gehäüsewandungsbereich 12 mit einem Innendurchmesser d (siehe Figur 3) bereitgestellt, der im Wesentlichen dem Abstand der Innenoberflächen 40 zweier in der fertigen Gehäuseanordnung 10 sich bezüglich der Gehäuselängsachse A gegenüberliegende Verzahnungsvorsprünge entspricht.

In einem nächsten Arbeitsvorgang werden dann in denjenigen Bereichen, in welchen nachfolgend die Öffnungen 34 im Gehäusebodenbereich 16 zu finden sind, also jeweils in einem Umfangsbereich, der zwischen zwei noch zu bildenden Verzahnungsvorsprüngen 22 der Verzahnungsformation 20 liegt, Öffnungen gebildet, beispielsweise durch Bohren. Durch diese Öffnungen hindurch wird dann ein Erodierdraht gezogen. Mit diesem Erodierdraht wird dann aus dem Gehäusewandungsbereich 12 jeweils der zwischen zwei in Umfangsrichtung unmittelbar aufeinanderfolgenden Verzahnungsvorsprüngen 22 liegende Materialbereich herausgeschnitten.

Da beim vorherigen Herstellen des Gehäuserohlings bereits darauf geachtet wurde, dass die Innnenabmessung des ringartigen Gehäusewandungsbereichs 12 dem gegenseitigen Abstand der Innenoberflächen 40 zweier sich gegenüberliegender Verzahnungsvorsprünge 23 entspricht, muss beim Erodiervorgang bei der Herstellung der Verzahnungsflanken 36, 38 nach radial innen hin nur soweit geschnitten werden, dass der beispielsweise kreisartige Anschluss an die bereits vorhandenen Innenoberflächen 40 erlangt wird. Es ergibt sich damit die in Figur 4 erkennbare pilzartige Konfiguration der im Gehäusebodenbereich 16 dann bei diesem Erodiervorgang erzeugten Öffnungen 34.

Sind die einzelnen Verzahnungsvorsprünge 22 der Verzahnungformation 20 dann gebildet worden, können die vorangehend bereits angesprochenen Radialöffnungen 24, 26 jeweils im Bereich zwischen zwei Verzahnungsvorsprüngen 22 gebildet werden. Dieser Vorgang könnte grundsätzlich aber auch vor dem Bilden der Verzahnungsformation 20 durchgeführt werden. Weiter werden dann im Bereich der Verzahnungsvorsprünge 22 an der Stirnseite 30 die Öffnungen 32 erzeugt, wobei auch dies bereits vor dem Herausarbeiten der Verzahnungsvorsprünge 22 erfolgen könnte.

Es ist dann eine Gehäuseanordnung bereitgestellt, an welcher keine weiteren wesentlichen Bearbeitungsvorgänge vorgenommen werden müssen. Es könnten grundsätzlich noch die durch materialabhebende Bearbeitung gebildeten Oberflächen geglättet werden. Selbstverständlich kann die so bereitgestellte Gehäusebaugruppe 10 dann auch noch einem Auswuchtvorgang unterzogen werden.

Durch die vorliegende Erfindung wird es möglich in einfacher Art und Weise, gleichwohl aber mit sehr hoher Präzision, eine Gehäuseanordnung für eine Reibungskupplung bereitzustellen, die auch sehr hohen Belastungen ausgesetzt werden kannn. Da das gesamte Bauteil aus einem Materialblock gebildet ist, wird eine sehr hohe Stabilität erlangt, und die Gefahr, dass beim Herstellen durch das Zusammenfügen verschiedener Bauteile Verformungen induziert werden, besteht grundsätzlich nicht.

## Patentansprüche

1. Gehäuseanordnung für eine Reibungskupplung, umfassend einen ringartigen Gehäusewandungsbereich (12), welcher an seiner nach radial innen weisenden Innenseite (18) eine Verzahnungsformation (20) zur Drehankopplung wenigstens eines Reiborgans aufweist, ferner umfassend einen mit dem Gehäusewandungsbereich (12) integralen Gehäusebodenbereich (16).

2. Gehäuseanordnung für eine Reibungskupplung nach Anspruch 1, **dadurch gekennzeichnet, dass** die Verzahnungsformation (20) eine Mehrzahl von sich in Richtung einer Gehäuselängsachse (A) erstreckenden und in Umfangsrichtung aufeinander folgenden Verzahnungsvorsprüngen (22) aufweist.

3. Gehäuseanordnung für eine Reibungskupplung nach Anspruch 2, **dadurch gekennzeichnet, dass** im Gehäusebodenbereich (16) jeweils in einem zwischen zwei Verzahnungsvorsprüngen (22) liegenden Bereich eine wenigstens teilweise an die Form der Verzahnungsvorsprünge (22) angepasste Öffnung (34) vorgesehen ist.

4. Verfahren zur Herstellung einer Gehäuseanordnung (10) für eine Reibungskupplung, insbesondere einer Gehäuseanordnung (10) nach einem der Ansprüche 1 bis 3, umfassend die Schritte:
a) Herstellen eines Gehäuserohlings mit einem ringartigen Gehäusewandungsbereich (12) und einem damit integralen Gehäusebodenbereich (16),
b) Bilden einer Verzahnungsformation (20) an einer Innenseite (18) des ringartigen Gehäusewandungsbereichs (12).

5. Verfahren nach Anspruch 4, **dadurch gekennzeichnet, dass** im Schritt a) der ringartige Gehäusewandlungsbereich (12) mit einer im Wesentlichen unstrukturierten Oberfläche an seiner Innenseite (18) bereitgestellt wird.

6. Verfahren nach Anspruch 4 oder Anspruch 5,
**dadurch gekennzeichnet, dass** im Schritt a) der ringartige Gehäusewandungsbereich (12) mit einem Innendurchmesser (d) bereitgestellt wird, welcher im Wesentlichen dem minimalen innendurchmesser der im Schritt b) zu bildenden Verzahnungsformation (20) entspricht.

7. Verfahren nach einem der Ansprüche 4 bis 6,
**dadurch gekennzeichnet, dass** im Schritt b) die Verzahnungsformation (20) durch materialabhebende Bearbeitung des im Schritt a) bereitgestellten Gehäuserohlings gebildet wird.

8. Verfahren nach einem der Ansprüche 4 bis 7,
**dadurch gekennzeichnet, dass** im Schritt b) die Verzahnungsformation (20) durch Drahterodieren gebildet wird.

9. Verfahren nach Anspruch 8, **dadurch gekennzeichnet, dass** im Gehäusebodenbereich (16) in einem Bereich zwischen zwei zu bildenden Verzahnungsvorsprüngen (22) der Verzahnungsformation (20) eine Öffnung zum Hindurchführen eines Erodierdrahtes gebildet wird.

10. Verfahren nach einem der Ansprüche 4 bis 9,
**dadurch gekennzeichnet, dass** vor oder nach dem Schritt b) im Gehäusewandungsbereich (12) wenigstens eine zwischen zwei gegebenenfalls noch zu bildenden Verzahnungsvorsprüngen (22) liegende Radialöffnung (24, 26) gebildet wird.

11. Verfahren nach einem der Ansprüche 4 bis 10,
**dadurch gekennzeichnet, dass** vor oder nach dem Schritt b) an einer vom Gehäusebodenbereich (16) entfernten Endseite (30) des Gehäusewandungsbereich (12) im Bereich wenigstens eines gegebenenfalls noch zu bildenden Verzahnungsvorsprungs (22) der Verzahnungsformation (20) eine Axialöffnung (32), vorzugsweise Innengewindeöffnung, gebildet wird.
